# EUROPÄISCHE PATENTSCHRIFT

(11) **EP 1 699 585 B1**
(45) Veröffentlichungstag und Bekanntmachung des Hinweises auf die Patenterteilung: **11.01.2012**
(21) Anmeldenummer: 04820841.7
(22) Anmeldetag: 12.11.2004
(51) Int. Cl.: B23B 51/02

(54) **MEHRZWECKBOHRWERKZEUG**
MULTI-PURPOSE DRILLING TOOL
OUTIL DE PERCAGE A USAGES MULTIPLES

(30) Priorität: 23.12.2003 DE 10361065
(43) Veröffentlichungstag der Anmeldung: 13.09.2006
(73) Patentinhaber: Robert Bosch GmbH, 70442 Stuttgart (DE)
(72) Erfinder: DUSCHA, Helmut, 88212 Ravensburg (DE); HAUSSMANN, August, 88213 Ravensburg (DE)
(86) Internationale Anmeldenummer: PCT/EP2004/052932
(87) Internationale Veröffentlichungsnummer: WO 2005/063427

(56) Entgegenhaltungen:
- EP-A- 0 427 857
- WO-A-03/051565
- DE-A1- 3 123 048
- US-A- 4 222 690
- US-A1- 2002 054 799
- US-A1- 2003 000 745

## Beschreibung

Die Erfindung betrifft ein Mehrzweckbohrwerkzeug gemäss dem Oberbegriff des Anspruchs 1.

Aus der DE 31 23 048 AI ist ein Universalbohrer bekannt, welcher einen Bohrerkopf mit einer Hartmetallplatte, einen daran anschließenden Schaft und einen Einspannschaft aufweist. Der Universalbohrer ist zu Bearbeitung von harten und weniger harten Materialien vorgesehen, wobei eine schlagend Bewegung beim Bohren nicht zugelassen wird. Nachteilig an einem derartigen Bohrer ist, dass dieser zwar zur Bearbeitung von Beton, Mauerwerk und dergleichen harten Materialien geeignet ist, aber durch die Einschränkung auf den rein drehenden Betrieb sich der gewohnte rasche Bearbeitungsfortschritt in diesen Materialien nicht einstellt und somit die Akzeptanz eines derartigen Bohrers insbesondere unter professionellen Anwendern gering ist.

Weiterhin ist aus der US 5,172, 775 ein Bohrer mit einer Schneidplatte bekannt, welcher ebenfalls für eine ausschließlich drehende Verwendung vorgesehen ist.

Schließlich beschreibt die US 2002/0054799 A1 ein Mehrzweckbohrwerkzeug mit einem Bohrerkopf, einer sich an diesen anschließenden Bohrerwendel und einem nachfolgenden Einspannschaft, wobei im Bohrerkopf bearbeitungsseitig ein Schneidelement vorgesehen ist, wobei das Schneidelement eine Spanfläche aufweist, wobei die Spanfläche bzw. eine Teilfläche der Spanfläche einen Spanwinkel aufweist, der einen Wert γ ≥ 0° besitzt und wobei das Schneidelement eine Freifläche mit einem Freiwinkel aufweist, der einen Wert 5° ≤ α ≤ 15° und insbesondere α ≤ 10° besitzt, wobei das Schneidelement seitlich durch zwei Längsseiten und zwei Querseiten begrenzt ist. Dieses Mehrzweckbohrwerkzeug ist jedoch nur für Werkstoffe wie Beton, Gestein, Mauerwerk und ähnliches geeignet.

Aufgabe der Erfindung ist es, ein Mehrzweckbohrwerkzeug vorzuschlagen, welches im drehenden Bohrmodus zur Bearbeitung von spanenden Materialien wie Holz, Metall und Kunststoff und von schlagempfindlichen Materialien wie Fliesen und Dachziegeln als auch im dreh-schlagenden Bohrmodus zum Bohren von Beton, Stein und Ziegeln geeignet ist.

Diese Aufgabe wird ausgehend von den Merkmalen des Oberbegriffs des Anspruchs 1 erfindungsgemäß durch die kennzeichnenden Merkmale des Anspruchs 1 gelöst. In den Unteransprüchen sind vorteilhafte und zweckmäßige Weiterbildungen angegeben.

Der Erfindung liegt der Kerngedanke zu Grunde, eine Symbiose von einem Bohrer für die rein drehende und einem Bohrer für die dreh-schlagende Verwendung zu erreichen, um dem handwerker ein Werkzeug zur Verfügung zu stellen, das die Zahl der Bohrerwechsel bzw. die Zahl der mitzunehmenden Bohrer reduziert und somit Arbeitszeit einspart, welche für den Bohrerwechsel oder das Auffinden oder Erkennen von Bohrern verloren geht. Das erfindungsgemäße Mehrzweckbohrwerkzeug weist ein Schneidelement mit Spanflächen, Freiflächen und Schneidkanten auf, wobei für wenigstens einen Teil der Spanfläche ein Spanwinkel (γ) mit γ ≥ 0° vorgesehen ist und wobei ein Freiwinkel (α) mit 5° ≤ (α ≤ 15° und insbesondere (α ≈ 10° vorgesehen ist. Ein derartiger universell verwendbarer Bohrer ist optimal auf die Bearbeitung unterschiedlichster Materialien im drehenden und im dreh-schlagenden Betrieb ausgerichtet, da der gewählte Spanwinkel auch zur Bearbeitung langspanender Materialien geeignet ist und da der große Keilwinkel die Schneide für die schlagende Beanspruchung ausreichend stabil macht. Insbesondere sind Spanwinkel (γ) von 0° bis 10° vorgesehen.

Die Erfindung sieht auch vor, die Schneidkante zu einer Bohrerlängsachse hin auszurichten. Der konvergierende Verlauf der Schneidkanten bewirkt die erforderliche Zentrierung des Mehrzweckbohrwerkzeugs beim Anbohren und während des Bohrens. Gleichzeitig wird durch die schlanke Ausbildung im Bereich der Bohrerlängsachse das Eindringen des Mehrzweckbohrwerkzeugs in den Werkstoff erleichtert.

Erfindungsgemäß ist es auch vorgesehen, den Verlauf der Schneidkante in Richtung der Bohrerlängsachse durch die Überlagerung mit einem kurvenförmigen und/oder bogenförmigen und/oder zickzackförmigen Verlauf zu variieren. Hierdurch ist es möglich die Geometrie der Freifläche, welche auch die Schlagfläche bildet, zu beeinflussen und optimal auf die auftretenden Belastungen auszulegen.

Weiterhin sieht die Erfindung, einen Spitzenwinkel (α) von 110° bis 130° und vorzugsweise etwa α = 120° vor, welchen die Schneidkanten miteinander bilden. Durch einen derartigen Spitzenwinkel ist es möglich ein sauberes Anbohren mit der Bohrerspitze durchzuführen und gleichzeitig die auftretenden Radialkräfte klein zu halten.

Erfindungsgemäß ist es vorgesehen, die Schneidkanten über eine Querschneide ineinander übergehen zu lassen. Hierdurch ist insbesondere im dreh-schlagenden Bohrbetrieb eine geringe Verschleißanfälligkeit der Hartmetallplatte im Bereich der Bohrerlängsachse gewährleistet, da die Freiflächen an der Querschneide etwa in einen dem Spitzenwinkel der Schneiden entsprechenden Spitzenwinkel stehen.

Gemäß einer Ausführungsvariante der Erfindung ist es vorgesehen, die Schneidkanten unter Vermeidung der Bildung einer Querschneide ineinander übergehen zu lassen. Eine solche Schneidspitze erlaubt insbesondere das hochgenaue Anbohren im bohrenden Betrieb. Bei einer entsprechenden Materialwahl für das Schneidelement ist beim vorgesehenen Spitzenwinkel trotzdem für den dreh-schlagenden Betrieb eine ausreichende Stabilität gegeben.

Die Erfindung sieht weiterhin vor, die Spanfläche zu einer Längsmittelebene leicht schräg zu stellen und die Spanfläche über eine rinnenartige Übergangsfläche in die Seitenfläche übergehen zu lassen. Hierdurch ist es möglich das Schneidelement ausgehend von einer einfachen Grundgeometrie auszubilden und auf einfache Weise den gewünschten Verlauf der Spanfläche bzw. der Schneidkante herzustellen.

Erfindungsgemäß treffen die Seitenfläche und die Spanfläche an einer geraden Übergangskante aufeinander, wobei die Übergangskante parallel zu einer Längsachse des Mehrzweckbohrwerkzeugs ausgerichtet ist oder in einem spitzen Winkel zu dieser Längsachse verläuft. Durch die unterschiedlichen Verläufe lässt sich das Größenverhältnis von Seitenfläche und Spanfläche beeinflussen. Insbesondere durch einen schrägen Verlauf der Übergangskante ist es möglich im Bereich der Bohrerspitze anfallende Späne oder anfallendes Bohrklein mit Hilfe der durch diesen Verlauf erzeugten Rinne auf dem Weg entlang der Bohrerlängsachse radial nach außen zu schieben.

Die Erfindung sieht vor, die Schneidkante über die Querschneide bzw. punktförmige Schneidspitze hinaus zu verlängern, wobei diese Verlängerung jenseits einer Quermittelebene in die Seitenfläche übergeht und insbesondere bogenförmig ausgebildet ist.

Erfindungsgemäß ist die Spanfläche als ebene Fläche ausgebildet, welche einen einheitlichen Spanwinkel y besitzt. Hierdurch ist es möglich die Geometrie der für den Mehrzweckbohrer erforderlichen Schneidplatt besonders einfach zu gestalten und auf eine kostenintensive und aufwendige Formgebung zu verzichten.

Schließlich sieht die Erfindung gemäß einer Ausführungsvariante vor, die Spanfläche durch wenigstens zwei ebene Teilflächen zu bilden, welche unterschiedliche Spanwinkel aufweisen, wobei in einem radial außen liegenden Bereich der Schneidplatte des Mehrzweckbohrwerkzeugs eine erste Teilfläche mit einem Spanwinkel γ ≥ 0° vorgesehen ist und in einem unmittelbar um die Längsmittelachse des Mehrzweckbohrwerkzeugs liegenden Bereich eine zweite Teilfläche vorgesehen ist, welche einen negativen Spanwinkel γ < 0° aufweist. Hierdurch ist es möglich in einem radial außen liegenden Bereich der Schneidplatte eine Spanfläche mit einem Spanwinkel von γ ≥ 0° zu verwirklichen und trotzdem eine kurze Querschneide oder eine Spitze auszubilden, ohne auf die stabile Gestaltung der Schneidplatte verzichten zu müssen.

Weitere Einzelheiten der Erfindung werden in der Zeichnung anhand von schematisch dargestellten Ausführungsbeispielen beschrieben.

Hierbei zeigt:
- Figur 1:: eine perspektivische Seitenansicht eines Schneidelements eines nicht dargestellten Mehrzweckbohrwerkzeugs,
- Figur 2a:: eine Seitenansicht eines weiteren Schneidelements eines weiteren nicht dargestellten Mehrzweckbohrwerkzeugs,
- Figur 2b:: eine Unteransicht des in der Figur 2a dargestellten Schneidelements,
- Figur 2c:: eine weitere Seitenansicht des in der Figur 2a dargestellten Schneidelements,
- Figur 2d:: eine Draufsicht auf das in der Figur 2a dargestellte Schneidelement,
- Figur 3a:: eine Seitenansicht eines erfindungsgemäßen Mehrzweckbohrwerkzeugs,
- Figur 3b:: eine Draufsicht auf das in der Figur 4a dargestellte Mehrzweckbohrwerkzeugs,
- Figur 3c:: eine vergrößerte Detailansicht des in der Figur 4a dargestellten Mehrzweckbohrwerkzeugs,
- Figur 3d:: eine Ansicht der Darstellung in der Figur 4c aus einer Pfeilrichtung IVd,
- Figur 4a-4c:: eine Ausführungsvariante einer Schneidplatte mit verkürzter Querschneide in drei Ansichten,
- Figur 5a-5c:: eine weitere Ausführungsvariante einer Schneidplatte ohne Querschneide in drei Ansichten und
- Figur 6a-6d:: acht Ausführungsvarianten für den Verlauf der Schneidkanten.

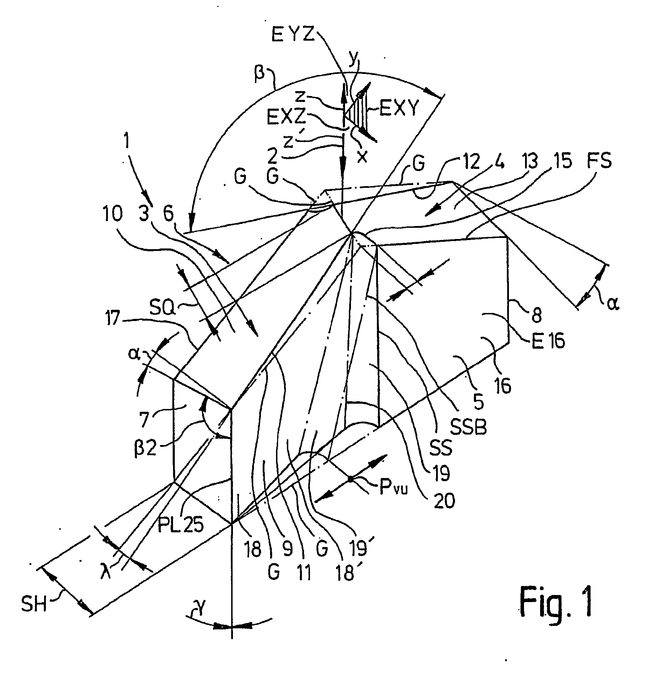

In der Figur 1 ist eine perspektivische Seitenansicht eines Schneidelements 1 eines nicht dargestellten Mehrzweckbohrwerkzeugs abgebildet. Das Schneidelement 1 ist in einen nicht dargestellten Bohrerkopf eingebettet, welcher in eine nicht dargestellte Bohrerwendel übergeht, welche wiederum in einen nicht dargestellten Einspannschaft übergeht. Der Einspannschaft kann zylindrisch oder als Systemeinsteckende und insbesondere als sogenannter SDS-Plus-Einspannschaft oder dergleichen ausgebildet sein und ermöglicht insbesondere sowohl einen drehenden als auch einen dreh-schlagenden Betrieb des Mehrzweckbohrwerkzeugs.

Das Schneidelement 1 ist im wesentlichen durch zwei punktsymmetrisch zu einer Bohrerlängsachse 2 angeordnete Schneiden 3 und 4 gebildet. Im folgenden wird die Beschreibung überwiegend auf die Schneide 3 begrenzt, wobei die Schneide 4 jeweils entsprechend ausgebildet ist. Seitlich ist das Schneidelement 1 durch zwei Längsseiten 5, 6 und zwei Querseiten 7, 8 begrenzt. Die Schneide 3 ist im wesentlichen durch eine einen Teil der Längsseite 5 bildende Spanfläche 9 und eine Freifläche 10 gebildet, wobei die Spanfläche 9 und die Freifläche 10 in einer Schneidkante 11 ineinander übergehen. Die Spanfläche 9 weist zu einer Parallelen PL bzw. einer Führungskante 25, welche parallel zur Längsachse 2 verläuft, einen Spanwinkel α = 0° auf. Die Freifläche 10 weist zu einer senkrecht zur Längsachse 2 stehenden Ebene EXY einen Freiwinkel α = 10° auf. Somit ergibt sich ein zwischen der Spanfläche 9 und der Freifläche 10 eingeschlossener Keilwinkel α2 = 80°, welcher der Schneide 3 eine hohe Stabilität gegen eine schlagende Belastung aus einer Richtung z' verleiht, denn die Schneidkante 11 wird trotz eines nicht vorhandenen negativen Spanwinkels, welcher bei Schneidelementen zum Schlagbohren üblich ist, noch optimal abgestützt. Die Schneidkanten 11 und 12 schließen zusammen einen Spitzenwinkel α =118° ein. Die Freiflächen 10, 13 der Schneiden 3 und 4 laufen in einer Querschneide 14 zusammen, welche auch die Schneidkanten 11 und 12 miteinander verbindet. Die Querschneide 14 wird von der Bohrerlängsachse 2 mittig geteilt. Die Schneidkante 11 weist noch eine Verlängerung 15 auf, mit welcher diese über die Querschneide 14 hinaus in den Bereich der Schneide 4 hinein bogenförmig zu einer Seitenfläche 16 verlängert wird und mit zwei Kanten zusammentrifft, nämlich einer Kante FS, welche durch die Freifläche 13 und die Seitenfläche 16 gebildet ist, und mit einer Kante SS, welche durch die Seitenfläche 16, die Spanfläche 9 und eine zwischen diesen liegende Übergangsfläche 19. gebildet ist. Die durch die vorgenannten Flächen 9, 16 und 19gebildete Längsseite 5 ist bedingt durch den Verlauf der Schneidkante 11 und deren Verlängerung 15 nicht als Ebene ausgebildet, sondern weicht hiervon durch ein Zurückfallen der Spanfläche 9 gegenüber einer durch die Seitenfläche 16 definierten Ebene E16 ab. Hierbei verläuft die Schneidkante 11 bzw. die Spanfläche 9 zur Ebene E16 in einem Verjüngungswinkel α = 7°. Dies bedeutet, dass sich das Schneidelement 1 im Bereich der Schneide 3 von der Querseite 7 zur Bohrlängsachse 2 hin von einer Breite SH auf eine Breite SQ verjüngt. Für das Verhältnis von SH zu SQ sind Werte im Bereich von 0,25 x SH ≤ SQ ≤ 0,9 x SH vorgesehen, insbesondere ist es vorgesehen, dass sich die Breite SH auf SQ = 0,5 x SH verjüngt. Hierbei verläuft eine Seitenfläche 17 parallel zu einer Längsmittelebene EYZ und die Schneidkante 11 läuft auf die Längsmittelebene EYZ bzw. die Bohrerlängsachse 2 im Verjüngungswinkel α zu. Gemäß einer nicht dargestellten Ausführungsvariante ist es vorgesehen, dass auch die Seitenfläche 17 auf Bohrerlängsachse 2 zuläuft.

Die mit G bezeichneten gestrichelten Linien deuten einen einfachen geometrischen Grundkörper an, aus welchem das Schneidelement 1 beispielsweise durch abtragende Bearbeitung gebildet ist.

Mit der strichpunktierten Kante SSB ist eine Ausführungsvariante für den Verlauf der Kante SS dargestellt. Die Kante SS, welche den Übergang zwischen der Seitenfläche 16. und der Spanfläche 9 definiert verläuft parallel zur Bohrerlängsachse 2. Die Spanfläche 9 bildet eine plane Fläche 18 und geht über eine etwa viertelkreisförmig gewölbte Übergangsfläche 19, welche parallel zur Kante SS verläuft, in die Seitenfläche 16 über. Die plane Fläche 18 und die Übergangsfläche 19 gehen an einer Kante 20 ineinander über. Im Gegensatz hierzu verläuft die Kante SSB in schräg zur Bohrerlängsachse 2. Hierdurch ergibt sich eine flächenmäßig kleinere plane Fläche 18' und eine ebenfalls schräg verlaufende rinnenartige Übergangsfläche 19'. Als Resultat der Verkleinerung der durch die Spanfläche 9 gebildeten planen Fläche 18' ergibt sich eine vergrößerte Seitenfläche 16. Gemäß nicht dargestellter Ausführungsvarianten sind auch kurvenförmige Verläufe der Kante SSB vorgesehen, wobei die Kante SSB vorzugsweise in der Ebene E16 der Seitenfläche 16 verläuft. Senkrecht zur Längsmittelebene EYZ verläuft eine Quermittelebene EXZ durch die Bohrerlängsachse.

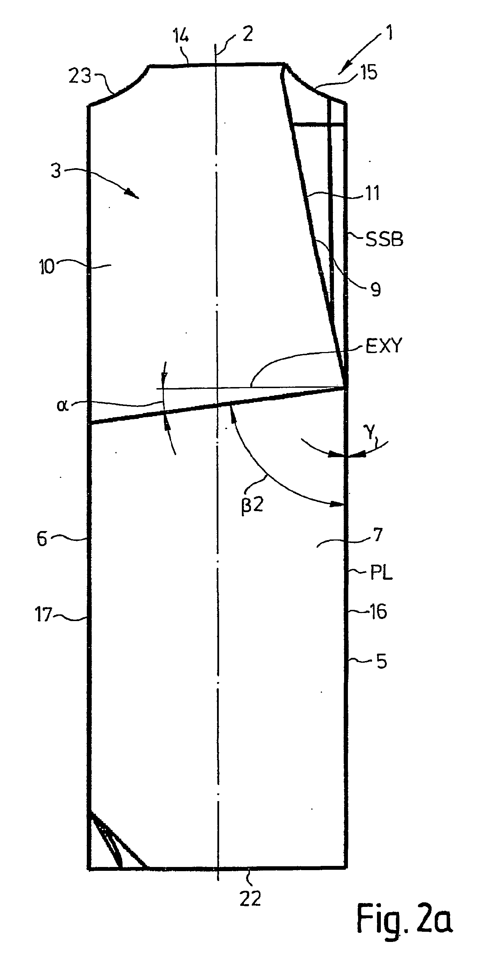

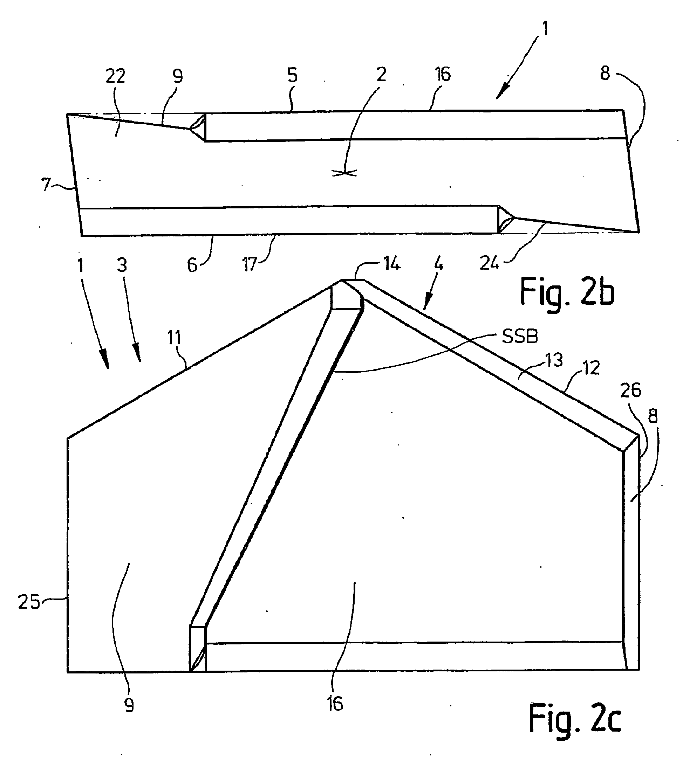

In der Figur 2a ist eine Seitenansicht auf eine Querseite 7 einer Hartmetallschneidplatte 1 eines nicht weiter dargestellten Mehrzweckbohrwerkzeugs dargestellt. Weiterhin ist die Hartmetallschneidplatte 1 durch eine Unterseite 22 und Längsseiten 5, 6 mit Seitenflächen 16, 17 begrenzt. Die Querseite 7 geht in eine Freifläche 10 über, welche zu einer Querschneide 14 hin ansteigt. Diesen Verlauf nimmt auch eine Schneidkante 11, die beim Zusammentreffen mit der Querschneide 14 in eine Verlängerung 15 übergeht und zusammen mit dieser und einer Kante SSB eine Spanfläche 9 begrenzt. Links einer Bohrerlängsachse 2 ist eine Verlängerung 23 einer zweiten Schneidkante 12 (siehe Figur 2c) dargestellt, welche bis zu einer Seitenfläche 17 verläuft. Weiterhin sind in der Figur 2a die für eine im wesentlichen durch die Freifläche 10, die Spanfläche 9 und die Schneidkante 11 gebildeten Schneide 3 wesentlichen Winkel dargestellt. Hierbei handelt es sich um einen Spanwinkel α = 0° zwischen einer Parallelen PL zur Bohrerlängsachse 2 und der Spanfläche 9, einen Freiwinkel α = 10° zwischen einer senkrecht zur Bohrerlängsachse 2 verlaufenden Ebene EXY und der Freifläche 10 und einen durch die Spanfläche 9 und die Freifläche 10 eingeschlossenen Keilwinkel α2 = 80°.

Die Figur 2b zeigt eine Draufsicht auf die Unterseite 22 des Schneidelements 1. Mit gestrichelten Linien sind jeweils Verlängerungen der Seitenflächen 16 und 17 angedeutet, welche zeigen, dass die Spanflächen 9 und 24 zur Bohrerlängsachse 2 hin orientiert sind.

Die Figur 2c zeigt eine Ansicht auf die Längsseite 6 des in den Figuren 2a und 2b dargestellten Schneidelements 1. Die Kante SSB, an welcher die Seitenfläche 16 in die Spanfläche 9 übergeht, weist einen Verlauf auf, welcher etwa dem der Kante SSB in der Figur 1 entspricht. Die Seitenfläche 16 dehnt sich bis in den Bereich der Schneide 3 aus. Von einer zweiten Schneide 4 sind eine Freifläche 13, eine Schneidkante 12 und eine Führungskante 26 zu sehen. Von der Schneide 3 sind nur die Schneidkante 11, die Spanfläche 9 und eine Führungskante 25 sichtbar.

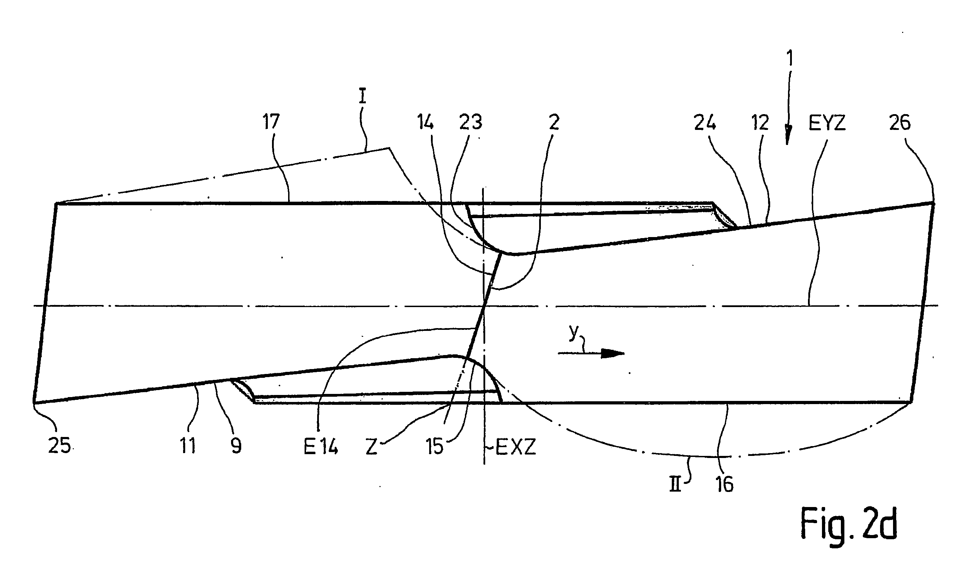

Die Figur 2d zeigt schließlich eine Draufsicht auf das in der Figur 2c dargestellte Schneidelement 1. In Analogie zur Figur 1 sind hier nochmals eine Längsmittelebene EYZ und eine Quermittelebene EXZ dargestellt. Die Seitenflächen 16, 17 verlaufen parallel zur Längsmittelebene EYZ und die Schneidkanten 11, 12 bzw. die Spanflächen 9, 24 laufen auf die Längsmittelebne EYZ zu. Eine Verlängerung 15 der Schneidkante 9 läuft über die Quermittelebene EXZ hinaus bis zur Seitenfläche 16 und liegt somit in y-Richtung jenseits eines Schnittpunktes Z, welchen eine gedachte Verlängerung der Querschneide 14 mit der Seitenfläche 16 bildet. Dies gilt analog auch für eine Verlängerung der Schneidkante 12. Mit anderen Worten definiert die Querschneide 14 eine senkrecht in der Zeichnungsebene stehende Ebene E14, so dass für die Schneidkanten 11 bzw. 12 gilt, dass diese jenseits der Ebene E14 in die Seitenfläche 16 bzw. 17 übergehen. Die Führungskanten 25, 26 weisen den größten radialen Abstand zu der Bohrerlängsachse auf. Weiterhin zeigt die Figur 2d mit den Ausführungen I und II zwei unterschiedliche Varianten für eine alternative Ausgestaltung der Seitenflächen, welche auch zu einer relativ kurzen Querschneide 14 mit guter Zentrierwirkung führen.

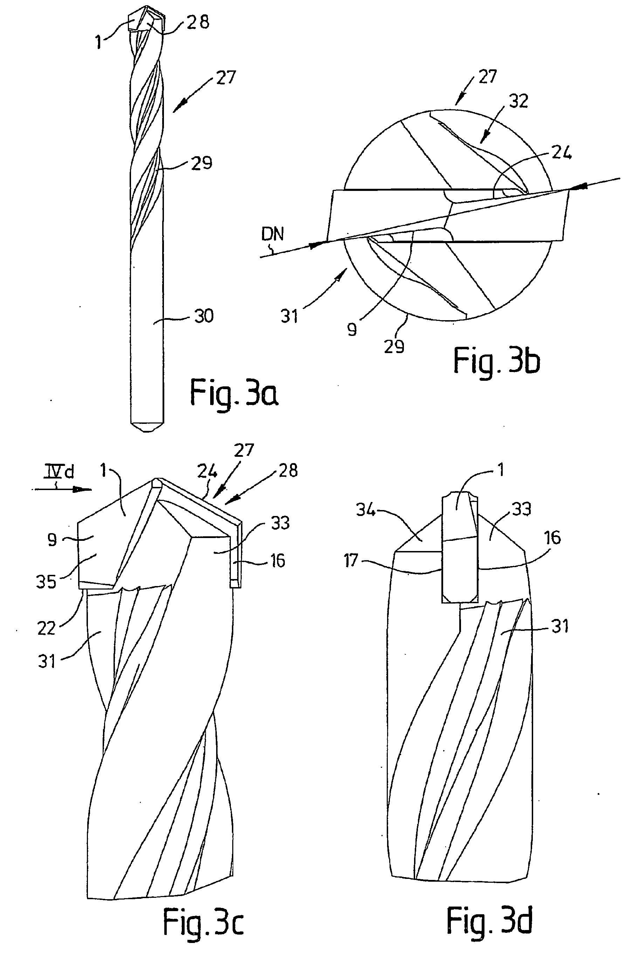

Die Figur 3a zeigt eine Seitenansicht eines Mehrzweckbohrwerkzeugs 27 mit einem Bohrerkopf 28, welcher ein Schneidelement 1 trägt und in eine Bohrerwendel 29 übergeht. Die Bohrerwendel geht wiederum in einen Einspannschaft 30 über.

In der Figur 3b ist eine Draufsicht auf das in der Figur 3a dargestellten Mehrzweckbohrwerkzeug 27 gezeigt. Die Schneidplatte 1 definiert einen Nenndurchmesser DN. Die Spanflächen 9, 24 gehen in Spannuten 31 bzw. 32 der Bohrerwendel 29 über.

Die Figur 3c zeigt eine Detailansicht des in der Figur 3a gezeigten Mehrzweckbohrwerkzeugs 27. Der Bohrerkopf 28 besteht aus zwei Fortsätzen 33, 34 der Bohrerwendel 29 (siehe auch Figur 3d), welche das Schneidelement 1 im Bereich von Seitenflächen 16, 17 halten. Die Spanflächen 9 bzw. 24 werden hierbei auch in einem unteren Bereich 35, welcher einer Unterseite 22 des Mehrzweckbohrwerkzeugs 1 nahe ist, nicht von den Fortsätzen 33 bzw. 34 überdeckt und gehen direkt in die Spannuten 31 bzw. 32 über. Hierdurch können Späne und/oder Bohrklein hindernisfrei abgefördert werden.

Die Figur 3d zeigt die in der Figur 3c dargestellte Detailansicht in einer um 90° gedrehten Ansicht. In dieser Ansicht ist nochmals die seitliche Einbettung des Schneidelements 1 zwischen Stegen sichtbar, welche durch die Fortsätze 33, 34 gebildet sind.

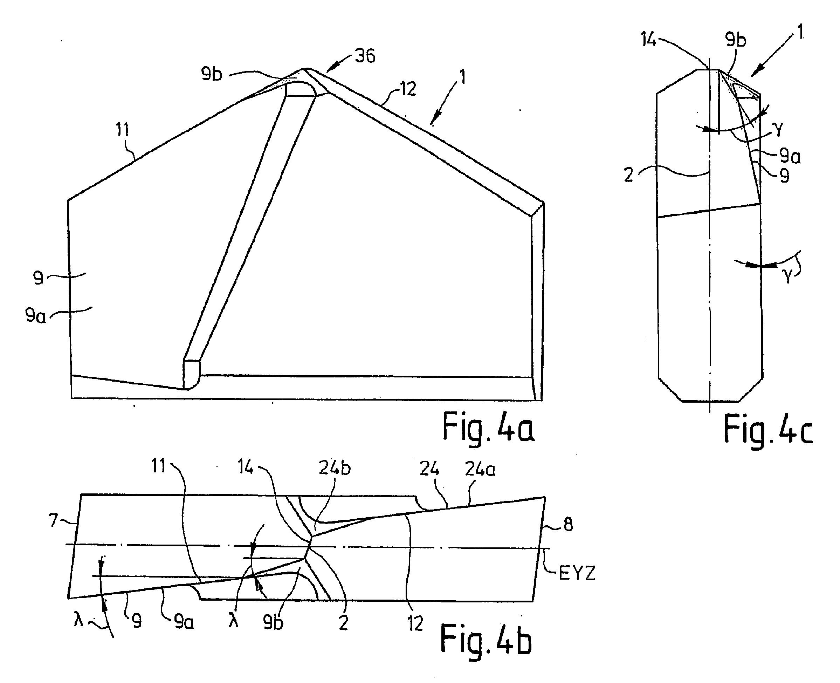

In den Figuren 4a bis 4c ist eine Ausführungsvariante einer Schneidplatte 1 mit verkürzter Querschneide 14 in drei Ansichten dargestellt. Diese ist weitestgehend analog zu den in den vorgehenden Figuren dargestellten Schneidplatten ausgeführt. Im Vergleich zu der in den Figuren 2a bis 2d dargestellten Scheidplatte ist die Querschneide 14 verkürzt. Diese Verkürzung der Querscheide 14 wird durch einen Anschliff im Bereich einer Bohrerspitze 36 erreicht. Der Anschliff bewirkt eine Unterteilung einer Spanfläche 9 bzw. 24 in zwei Teilflächen 9a, 9b bzw. 24a, 24b. Die ersten Teilflächen 9a, 24a bilden eine weitaus größere Fläche als die zweiten Teilflächen 9b, 24b, welche im Bereich der Bohrerspitze 36 ausgebildet sind. Die ersten Teilflächen 9a, 24a weisen einen Spanwinkel α = 0° auf und die zweiten Teilflächen 9b, 24b besitzen einen negativen Spanwinkel α ≈ 35°. Die Aufteilung der Spanfläche 9 bzw. 24 in zwei plane Teilflächen 9a, 9b bzw. 24a, 24b mit unterschiedlichen Spanwinkeln bewirkt auch einen polygonartigen Verlauf der Schneidkante 11 bzw. 12. Das heißt ein Verjüngungswinkel α der Schneidkante 12 zu einer Längsmittelebene EYZ vergrößert sich zu einer Bohrerlängsachse 2 hin sprunghaft von α ≈ 7° auf α ≈ 18°.

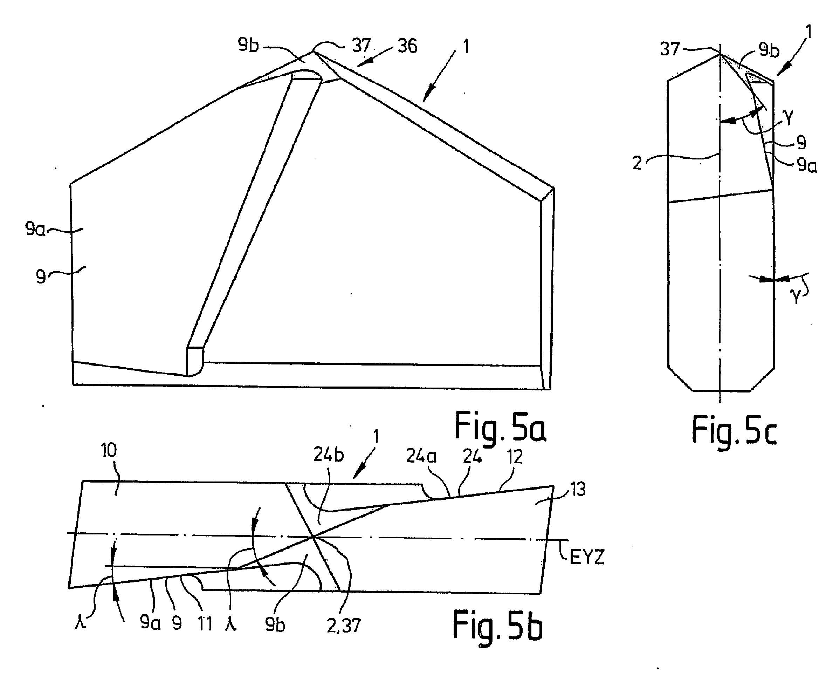

In den Figuren 5a bis 5c ist eine weitere Ausführungsvariante einer Schneidplatte 1 in drei Ansichten dargestellt. Diese ist weitestgehend analog zu den in den vorgehenden Figuren dargestellten Schneidplatten ausgeführt, weist aber keine Querschneide, sondern eine Spitze 37 auf, in welcher Freiflächen 10, 13 und Spanflächen 9, 24 punktförmig zusammentreffen. Diese Spitze 37 wird durch einen Anschliff im Bereich einer Bohrerspitze 36 erreicht. Der Anschliff bewirkt eine Unterteilung einer Spanfläche 9 bzw. 24 in zwei Teilflächen 9a, 9b bzw. 24a, 24b. Die ersten Teilflächen 9a, 24a bilden eine weitaus größere Fläche als die zweiten Teilflächen 9b, 24b, welche im Bereich der Bohrerspitze 36 ausgebildet sind. Die ersten Teilflächen 9a, 24a weisen einen Spanwinkel α = 0° auf und die zweiten Teilflächen 9b, 24b besitzen einen negativen Spanwinkel α ≈ 40°. Die Aufteilung der Spanfläche 9 bzw. 24 in zwei plane Teilflächen 9a, 9b bzw. 24a, 24b mit unterschiedlichen Spanwinkeln α bewirkt auch einen polygonartigen Verlauf der Schneidkante 11 bzw. 12. Das heißt ein Verjüngungswinkel α der Schneidkante 12 zu einer Längsmittelebene EYZ vergrößert sich zu einer Bohrerlängsachse 2 hin sprunghaft von α ≈ 7° auf α ≈ 23°.

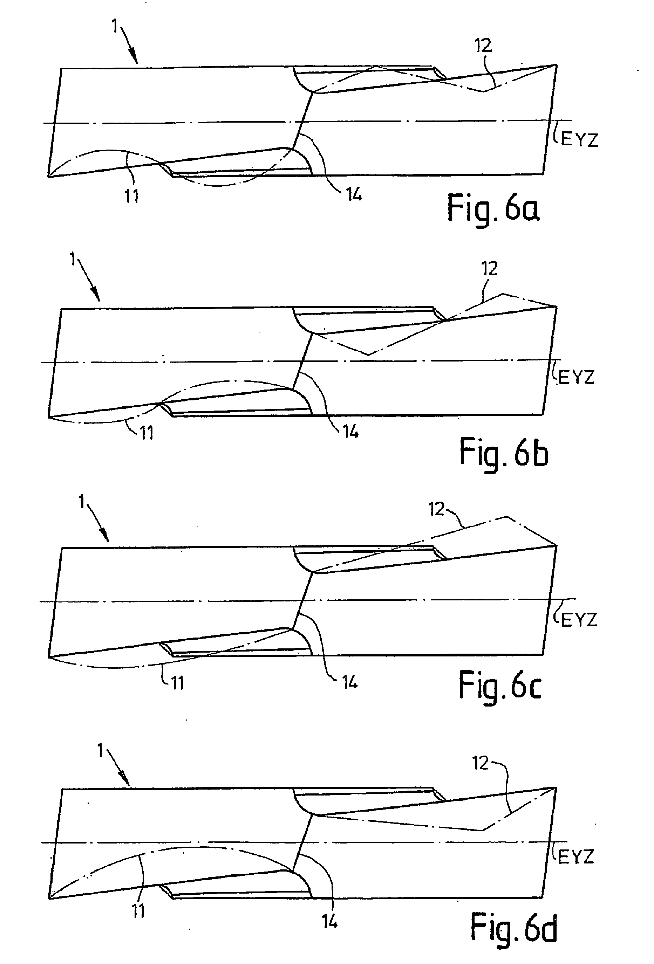

Die Figuren 6a bis 6d zeigen acht Ausführungsvarianten für den Verlauf einer Schneidkante 11 bzw. 12 in Draufsicht auf Schneidelemente. Die Ausführungsvarianten sind jeweils in Abbildungen gemäß der Figur 2d mit gestrichelten Linien angedeutet.

Die Figur 6a zeigt an einem Schneidelement 1 eine Schneidkante 11, welche sinusförmige auf eine Querschheide 14 zuläuft, wobei sich die Schneidkante 11 in einem radial außenliegenden Bereich des Schneidelements 1 zunächst einer Längsmittelebene EYZ annähert. Weiterhin zeigt die Figur 6a eine Schneidkante 12, welche zickzackförmig auf die Querschneide 14 zuläuft, wobei sich die Schneidkante 12 in einem radial außenliegenden Bereich des Schneidelements 1 zunächst der Längsmittelebene EYZ annähert.

Die Figur 6b zeigt an einem Schneidelement 1 eine Schneidkante 11, welche sinusähnlich auf eine Querschneide 14 zuläuft, wobei sich die Schneidkante 11 in einem radial außenliegenden Bereich des Schneidelements 1 zunächst von einer Längsmittelebene EYZ entfernt. Weiterhin zeigt die Figur 6b eine Schneidkante 12, welche zickzackförmig auf die Querschneide 14 zuläuft, wobei sich die Schneidkante 12 in einem radial außenliegenden Bereich des Schneidelements 1 zunächst von der Längsmittelebene EYZ entfernt.

Die Figur 6c zeigt an einem Schneidelement 1 eine Schneidkante 11, welche bogenförmig auf eine Querschneide 14 zuläuft, wobei sich die Schneidkante 11 in einem radial außenliegenden Bereich des Schneidelements 1 zunächst von einer Längsmittelebene EYZ entfernt. Weiterhin zeigt die Figur 6c eine Schneidkante 12, welche winkelähnlich auf die Querschneide 14 zuläuft, wobei sich die Schneidkante 12 in einem radial außenliegenden Bereich des Schneidelements 1 zunächst von der Längsmittelebene EYZ entfernt.

Die Figur 6d zeigt an einem Schneidelement 1 eine Schneidkante 11, welche bogenförmig auf eine Querschneide 14 zuläuft, wobei sich die Schneidkante 11 in einem radial außenliegenden Bereich des Schneidelements 1 zunächst einer Längsmittelebene EYZ annähert. Weiterhin zeigt die Figur 6d eine Schneidkante 12, welche winkelähnlich auf die Querschneide 14 zuläuft, wobei sich die Schneidkante 12 in einem radial außenliegenden Bereich des Schneidelements 1 zunächst der Längsmittelebene EYZ annähert.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Als Werkstoffe für das Schneidelement kommen insbesondere Hartmetall, PKD oder Keramik in Betracht.

### Bezugszeichenliste:

- 1: Schneidelement
- 2: Bohrerlängsachse
- 3, 4: Schneide
- 5, 6: Längsseite
- 7, 8: Querseite
- 9: Spanfläche von 3
- 9a, 9b: erste bzw. zweite Teilfläche von 9
- 10: Freifläche von 3
- 11: Schneidkante von 3
- 12: Schneidkante von 4
- 13: Freifläche von 4
- 14: Querschneide
- 15: Verlängerung von 9
- 16, 17: Seitenfläche
- 18, 18': plane Fläche
- 19, 19': Übergangsfläche zwischen 16 und 18
- 20: Übergangskante in 9 bei SS
- 21: Übergangskante in 9 bei SSB
- 22: Unterseite
- 23: Verlängerung von 12
- 24: Spanfläche von 4
- 24a, 24b: erste bzw. zweite Teilfläche von 24
- 25, 26: Führungskante
- 27: Mehrzweckbohrwerkzeug
- 28: Bohrerkopf
- 29: Bohrerwendel
- 30: Einspannschaft
- 31, 32: Spannut von 29
- 33, 34: Fortsatz von 29
- 35: unterer Bereich von 9 bzw. 24
- 36: Bohrerspitze
- 37: Spitze

- α: Freiwinkel
- α: Spitzenwinkel
- α2: Keilwinkel
- α: Spanwinkel
- α: Verjüngungswinkel
- DN: Nenndurchmesser von 27
- E14: Ebene definiert durch 14
- E16: Ebene definiert durch 16
- EXY: Ebene senkrecht zu 2
- EXZ: Quermittelebene
- EYZ: Längsmittelebene
- FS: Kante zwischen 13 und 16
- G: Grundlinien, deuten geometrischen Grundkörper an
- SH: Breite von 1 bei 7
- SS: Kante zwischen 16 und 9
- SSB: Variante für Kante zwischen 16 und 9
- SQ: Breite von 1 bei 14
- Z: Schnittpunkt zwischen 14 und 16

## Patentansprüche

1. Mehrzweckbohrwerkzeug (27) mit einem Bohrerkopf (28), einer sich an diesen anschließenden Bohrerwendel (29) und einem nachfolgenden Einspannschaft (30), wobei im Bohrerkopf (28) bearbeitungsseitig ein Schneidelement(1) vorgesehen ist, wobei das Schneidelement(1) eine Spanfläche (9,24) aufweist, wobei die Spanfläche(9, 24) bzw. eine Teilfläche (9a, 9b, 24a, 24b) der Spanfläche (9,24) einen Spanwinkel(γ) aufweist, der einen Wert γ ≥ 0° besitzt und dass das Schneidelement (1)^{.}. eine Freifläche (10, 13) mit einem Freiwinkel (α) aufweist, der einen Wert 5 ≤ α ≤ 15 und insbesondere α ≈ 10 besitzt, wobei das Schneidelement (1) seitlich durch zwei Längsseiten (5, 6) und zwei Querseiten (7, 8) begrenzt ist, **dadurch gekennzeichnet, dass** sich eine Schneide (3) des Schneidelements (1) von einer Querseite (7, 8) zu einer Bohrerlängsachse (2) hin von einer Breite (SH) auf eine Breite (SQ) verjüngt.

2. Mehrzweckbohrwerkzeug (27) nach Anspruch 1, **dadurch gekennzeichnet, dass** das Schneidelement (1) eine durch die Spanfläche (9, 24) und die Freifläche (10, 13) gebildete Schneidkante (11, 12) aufweist, welche zu einer Bohrerlängsachse (2) hin gerichtet ist.

3. Mehrzweckbohrwerkzeug (27) nach einem der vorhergehenden Ansprüche, **dadurch gekennzeichnet, dass** die Schneidkante (11, 12) bogenförmig und/oder zickzackförmig verläuft und sich hierbei der Bohrerlängsachse (2) bzw. der Längsmittelebene (EYZ) annähert.

4. Mehrzweckbohrwerkzeug (27) nach einem der vorhergehenden Ansprüche, **dadurch gekennzeichnet, dass** die Schneidkanten (11, 12) miteinander einen Spitzenwinkel (α) von 100° bis 150° und vorzugsweise etwa α = 120° bilden.

5. Mehrzweckbohrwerkzeug (27) nach einem der vorhergehenden Ansprüche, **dadurch gekennzeichnet, dass** die Schneidkanten (11, 12) über eine Querschneide (14) ineinander übergehen.

6. Mehrzweckbohrwerkzeug (27) nach einem der vorhergehenden Ansprüche, **dadurch gekennzeichnet, dass** die Schneidkanten (11, 12) unter Vermeidung der Bildung einer Querschneide ineinander übergehen.

7. Mehrzweckbohrwerkzeug (27) nach einem der vorhergehenden Ansprüche, **dadurch gekennzeichnet, dass** die Spanfläche (9, 24) zu einer Längsmittelebene (EYZ) in einem spitzen Verjüngungswinkel (α) steht und über eine gebogene Fläche (19) in die Seitenfläche (16, 17) übergeht.

8. Mehrzweckbohrwerkzeug (27) nach einem der vorhergehenden Ansprüche, **dadurch gekennzeichnet, dass** die Seitenfläche (16, 17) und die Spanfläche (9, 24) an einer geraden Übergangskante (SS, SSB) aufeinander treffen, wobei die Übergangskante (SS; SSB) parallel oder in einem spitzen Winkel zu einer Bohrerlängsachse (2) verläuft.

9. Mehrzweckbohrwerkzeug (27) nach einem der vorhergehenden Ansprüche, **dadurch gekennzeichnet, dass** die Schneidkante (11, 12) eine Verlängerung (15, 23) aufweist, welche jenseits einer Quermittelebene (EXZ) in die Seitenfläche (16, 17) übergeht.

10. Mehrzweckbohrwerkzeug (27) nach einem der vorhergehenden Ansprüche, **dadurch gekennzeichnet, dass** das Schneidelement (1) als Hartmetallschneidelement ausgebildet ist.

11. Mehrzweckbohrwerkzeug (27) nach einem der vorhergehenden Ansprüche, **dadurch gekennzeichnet, dass** die Spanfläche (9, 24) als ebene Fläche ausgebildet ist bzw. einen einheitlichen Spanwinkel (α) aufweist.

12. Mehrzweckbohrwerkzeug (27) nach einem der vorhergehenden Ansprüche, **dadurch gekennzeichnet, dass** die Spanfläche (9, 24) eine erste Teilfläche (9a, 24a) mit einem Spanwinkel γ ≥ 0° und eine zweite Teilfläche (9b, 24b) mit einem negativen Spanwinkel γ < 0° aufweist.

13. Mehrzweckbohrwerkzeug (27) nach einem der vorhergehenden Ansprüche, **dadurch gekennzeichnet, dass** die Spanfläche (9, 24) nahe der Bohrerlängsachse (2) einen negativen Spanwinkel γ < 0° aufweist.

14. Mehrzweckbohrwerkzeug (27) nach einem der vorhergehenden Ansprüche, **dadurch gekennzeichnet, dass** die Spanfläche (9, 24) zu Querseiten (7, 8) hin einen Spanwinkel γ ≥ 0° aufweist.

15. Mehrzweckbohrwerkzeug (27) nach einem der vorhergehenden Ansprüche, **dadurch gekennzeichnet, dass** das Mehrzweckbohrwerkzeug (27) drehenden und dreh-schlagenden verwendbar ist.

## Claims

1. Multi-purpose drilling tool (27) comprising a drill head (28), a drill helix (29) adjoining said drill head (28), and a following clamping shank (30), wherein a cutting element (1) is provided in the drill head (28) on the working side, wherein the cutting element (1) has a rake face (9, 24), wherein the rake face (9, 24) or a sectional surface (9a, 9b, 24a, 24b) of the rake face (9, 24) has a rake angle (γ) which has a value of γ ≥ 0°, and wherein the cutting element (1) has a flank (10, 13) having a clearance angle (α) which has a value of 5° ≤ α ≤ 15° and in particular α ≈ 10°, wherein the cutting element (1) is laterally defined by two longitudinal sides (5, 6) and two transverse sides (7, 8), **characterized in that** a lip (3) of the cutting element (1) tapers from a transverse side (7, 8) towards a drill longitudinal axis (2) from a width (SH) to a width (SQ).

2. Multi-purpose drilling tool (27) according to Claim 1, **characterized in that** the cutting element (1) has a cutting edge (11, 12) which is formed by the rake face (9, 24) and the flank (10, 13) and which is directed towards a drill longitudinal axis (2).

3. Multi-purpose drilling tool (27) according to either of the preceding claims, **characterized in that** the cutting edge (11, 12) runs in a curved and/or zigzag shape and in the process approaches the drill longitudinal axis (2) or the longitudinal centre plane (EYZ).

4. Multi-purpose drilling tool (27) according to one of the preceding claims, **characterized in that** the cutting edges (11, 12) meet to form a point angle (α) of 100° to 150° and preferably approximately α = 120°.

5. Multi-purpose drilling tool (27) according to one of the preceding claims, **characterized in that** the cutting edges (11, 12) merge into one another via a chisel edge (14).

6. Multi-purpose drilling tool (27) according to one of the preceding claims, **characterized in that** the cutting edges (11, 12) merge into one another without forming a chisel edge.

7. Multi-purpose drilling tool (27) according to one of the preceding claims, **characterized in that** the rake face (9, 24) is at an acute taper angle (α) to a longitudinal centre plane (EYZ) and merges into the side face (16, 17) via a curved surface (19).

8. Multi-purpose drilling tool (27) according to one of the preceding claims, **characterized in that** the side face (16, 17) and the rake face (9, 24) meet one another at a straight transition edge (SS, SSB), wherein the transition edge (SS, SSB) runs parallel to or at an acute angle to a drill longitudinal axis (2).

9. Multi-purpose drilling tool (27) according to one of the preceding claims, **characterized in that** the cutting edge (11, 12) has an extension (15, 23) which merges into the side face (16, 17) on the other side of a transverse centre plane (EXZ).

10. Multi-purpose drilling tool (27) according to one of the preceding claims, **characterized in that** the cutting element (1) is designed as a carbide cutting element.

11. Multi-purpose drilling tool (27) according to one of the preceding claims, **characterized in that** the rake face (9, 24) is designed as a flat surface or has a uniform rake angle (α).

12. Multi-purpose drilling tool (27) according to one of the preceding claims, **characterized in that** the rake face (9, 24) has a first sectional surface (9a, 24a) having a rake angle γ ≥ 0° and a second sectional surface (9b, 24b) having a negative rake angle γ < 0°.

13. Multi-purpose drilling tool (27) according to one of the preceding claims, **characterized in that** the rake face (9, 24) has a negative rake angle γ < 0 close to the drill longitudinal axis (2).

14. Multi-purpose drilling tool (27) according to one of the preceding claims, **characterized in that** the rake face (9, 24) has a rake angle γ ≥ 0° towards transverse sides (7, 8).

15. Multi-purpose drilling tool (27) according to one of the preceding claims, **characterized in that** the multi-purpose drilling tool (27) can be used in a rotational and rotary-percussive manner.

## Revendications

1. Outil de perçage à usage multiple (27) comprenant une tête de foret (28), une hélice de foret (29) qui s'y raccorde, suivie d'une tige de serrage (30), un élément tranchant (1) étant prévu dans la tête de foret (28) du côté de l'usinage, l'élément tranchant (1) présentant une surface d'enlèvement de copeaux (9, 24), la surface d'enlèvement de copeaux (9, 24) ou une surface partielle (9a, 9b, 24a, 24b) de la surface d'enlèvement de copeaux (9, 24) présentant un angle d'enlèvement de copeaux (γ) qui possède une valeur γ ≥ 0° et l'élément tranchant (1) présentant une surface libre (10, 13) avec un angle libre (α), qui possède une valeur 5° ≤ α ≤ 15° et notamment α ≈ 10°, l'élément tranchant (1) étant limité latéralement par deux côtés longitudinaux (5, 6) et deux côtés transversaux (7, 8), **caractérisé en ce qu'**un tranchant (3) de l'élément tranchant (1) se rétrécit depuis un côté transversal (7, 8) jusqu'à un axe longitudinal du foret (2) depuis une largeur (SH) jusqu'à une largeur (SQ).

2. Outil de perçage à usage multiple (27) selon la revendication 1, **caractérisé en ce que** l'élément tranchant (1) présente une arête de coupe (11, 12) formée par la surface d'enlèvement de copeaux (9, 24) et la surface libre (10, 13), laquelle arête de coupe est orientée vers un axe longitudinal du foret (2).

3. Outil de perçage à usage multiple (27) selon l'une quelconque des revendications précédentes, **caractérisé en ce que** l'arête de coupe (11, 12) s'étend sous forme courbe et/ou en zigzag et se rapproche ainsi de l'axe longitudinal du foret (2) ou du plan médian longitudinal (EYZ).

4. Outil de perçage à usage multiple (27) selon l'une quelconque des revendications précédentes, **caractérisé en ce que** les arêtes de coupe (11, 12) forment entre elles un angle d'apex (α) de 100° à 150°, et de préférence d'environ α = 120°.

5. Outil de perçage à usage multiple (27) selon l'une quelconque des revendications précédentes, **caractérisé en ce que** les arêtes de coupe (11, 12) se prolongent l'une dans l'autre par le biais d'un tranchant transversal (14).

6. Outil de perçage à usage multiple (27) selon l'une quelconque des revendications précédentes, **caractérisé en ce que** les arêtes de coupe (11, 12) se prolongent l'une dans l'autre sans former un tranchant transversal.

7. Outil de perçage à usage multiple (27) selon l'une quelconque des revendications précédentes, **caractérisé en ce que** la surface d'enlèvement de copeaux (9, 24) forme avec un plan médian longitudinal (EYZ) un angle de rétrécissement aigu (α) et se prolonge par le biais d'une surface courbe (19) dans la surface latérale (16, 17).

8. Outil de perçage à usage multiple (27) selon l'une quelconque des revendications précédentes, **caractérisé en ce que** la surface latérale (16, 17) et la surface d'enlèvement de copeaux (9, 24) se rencontrent au niveau d'une arête de transition droite (SS, SSB), l'arête de transition (SS ; SSB) s'étendant parallèlement à un axe longitudinal du foret (2) ou suivant un angle aigu par rapport à celui-ci.

9. Outil de perçage à usage multiple (27) selon l'une quelconque des revendications précédentes, **caractérisé en ce que** l'arête de coupe (11, 12) présente un prolongement (15, 23) qui se prolonge pour sa part dans la surface latérale (16, 17) au-delà d'un plan médian transversal (EXZ).

10. Outil de perçage à usage multiple (27) selon l'une quelconque des revendications précédentes, **caractérisé en ce que** l'élément tranchant (1) est réalisé sous forme d'élément tranchant en métal dur.

11. Outil de perçage à usage multiple (27) selon l'une quelconque des revendications précédentes, **caractérisé en ce que** la surface d'enlèvement de copeaux (9, 24) est réalisée sous forme de surface plane ou présente un angle d'enlèvement de copeaux (α) unitaire.

12. Outil de perçage à usage multiple (27) selon l'une quelconque des revendications précédentes, **caractérisé en ce que** la surface d'enlèvement de copeaux (9, 24) présente une première surface partielle (9a, 24a) avec un angle d'enlèvement de copeaux γ ≥ 0° et une deuxième surface partielle (9b, 24b) avec un angle d'enlèvement de copeaux négatif γ < 0°.

13. Outil de perçage à usage multiple (27) selon l'une quelconque des revendications précédentes, **caractérisé en ce que** la surface d'enlèvement de copeaux (9, 24) présente à proximité de l'axe longitudinal du foret (2) un angle d'enlèvement de copeaux γ négatif < 0°.

14. Outil de perçage à usage multiple (27) selon l'une quelconque des revendications précédentes, **caractérisé en ce que** la surface d'enlèvement de copeaux (9, 24) présente un angle d'enlèvement de copeaux γ ≥ 0° vers les côtés transversaux (7, 8).

15. Outil de perçage à usage multiple (27) selon l'une quelconque des revendications précédentes, **caractérisé en ce que** l'outil de perçage à usage multiple (27) peut être utilisé en mode de rotation et de rotation-percussion.
